# EUROPÄISCHE PATENTANMELDUNG

(11) **EP 2 412 468 A2**
(43) Veröffentlichungstag der Anmeldung: **01.02.2012**
(21) Anmeldenummer: 11175006.3
(22) Anmeldetag: 22.07.2011
(51) Int. Cl.: B23H 3/00, B23H 11/00

(54) **Verfahren zur Herstellung eines Metallbauteils**

(30) Priorität: 29.07.2010 DE 102010032701
(71) Anmelder: Leistritz Extrusionstechnik GmbH, 90459 Nürnberg (DE)
(72) Erfinder: Réblitz, Martin, 90409 Nürnberg (DE); Schmidt, Georg, 91126 Schwabach (DE)
(74) Vertreter: Blaumeier, Jörg

(57) **Zusammenfassung**

Verfahren zur Herstellung eines Metallbauteils, das eine durch eine Material abtragende und/oder eine Material umformende Bearbeitung erzeugte dreidimensionale Form aufweist, wobei eine Feinbearbeitung eines oder mehrerer ausgezeichneter Bauteilabschnitte durch elektrochemische Bearbeitung mittels einer düsenartigen Kathode, über die ein Elektrolyt in den Arbeitsbereich abgegeben wird, und wobei die Kathode oder das Metallbauteil mittels eines Manipulatorelements frei im Raum bewegt wird, erfolgt.

## Beschreibung

Die Erfindung betrifft ein Verfahren zur Herstellung eines Metallbauteils, das eine durch eine Material abtragende und/oder eine Material umformende Bearbeitung erzeugte dreidimensionale Form aufweist.

Metallbauteile werden mit verschiedenen Verfahren bearbeitet oder geformt, um eine gewünschte dreidimensionale Geometrie zu erhalten. Bekannt sind materialabtragende Arbeitsverfahren wie beispielsweise Bohren, Drehen, Fräsen, EDM (Funkenerosion) und ECM (elektrochemische Bearbeitung) oder materialumformende Arbeitsverfahren wie beispielsweise Stanzen, Pressen oder Schmieden. Diese Verfahren dienen üblicherweise der Grobkonturierung, d. h., dass mit diesen Arbeitsverfahren die dreidimensionale Form im Wesentlichen herausgearbeitet wird. Ausgezeichnete Bauteilabschnitte jedoch sind nachfolgend noch einer Feinbearbeitung zu unterziehen, um dort etwaige Grate, Überstände, Kanten und Ähnliches abzutragen, Ecken zu räumen und Ähnliches. Diese Feinbearbeitung wird in den meisten Fällen durch Fräsen erfolgen. Während dies bei großen Metallbauteilen aufgrund der Zugänglichkeit der ausgezeichneten Bauteilabschnitte, die fein zu bearbeiten sind, häufig auf einfache Weise möglich ist, ergeben sich vor allem bei kleineren Metallbauteilen oder bei Metallbauteilen, bei denen die ausgezeichneten Bauteilabschnitte entweder sehr schmal sind oder aufgrund der Bauteilgeometrie schwer zugänglich sind, häufig Probleme, da das Werkzeug nicht oder nur teilweise in den gewünschten Bereich geführt werden kann. Weitere Probleme ergeben sich häufig aus dem Material des Metallbauteils. Vor allem im Bereich von Spezialanwendungen kommen häufig besondere Legierungen zum Einsatz wie z. B. Titanlegierungen oder Nickellegierungen. Während Bauteile aus Titanlegierungen noch eine hinreichende Zerspanbarkeit besitzen, mithin also beispielsweise zufriedenstellend gefräst werden können, weisen Bauteile aus Nickellegierungen eine relativ schlechte Zerspanbarkeit auf. In Verbindung mit komplexen geometrischen Verhältnissen resultieren hieraus noch größere Probleme im Rahmen der Feinbearbeitung.

Der Erfindung liegt damit das Problem zugrunde, ein Verfahren zur Herstellung eines Metallbauteils anzugeben, das eine Feinbearbeitung ausgezeichneter Bauteilabschnitte auch bei komplexer Bauteilgeometrie und schwieriger Bearbeitbarkeit des Bauteilmaterials ermöglicht.

Zur Lösung dieses Problems ist bei einem Verfahren der eingangs beschriebenen Art vorgesehen, dass eine Feinbearbeitung eines oder mehrerer ausgezeichneter Bauteilabschnitte durch elektrochemische Bearbeitung mittels einer düsenartigen Kathode, über die ein Elektrolyt in den Arbeitsbereich abgegeben wird, wobei die Kathode oder das Metallbauteil mittels eines Manipulatorelements frei im Raum bewegt wird, erfolgt.

Beim erfindungsgemäßen Verfahren erfolgt die Feinbearbeitung des oder der ausgezeichneten Bauteilbereiche, wie im Bereich von Kanten, Flächenübergängen, Graten und Ähnlichem, durch eine elektrochemische Bearbeitung, üblicherweise ECM (electrochemical machining) genannt. Hierzu wird eine düsenartige Kathode verwendet, über die der Elektrolyt unmittelbar in den Arbeitsbereich abgegeben wird. D. h ., dass der Elektrolyt der Kathode zugeführt und an der Spitze der düsenartigen Kathode unmittelbar auf das fein zu bearbeitende Metallbauteil (Werkstück) strömt. Das Anlegen einer elektrischen Arbeitsspannung zwischen Metallbauteil und Kathode bewirkt einen Prozessstrom, der einen Materialabtrag bewirkt. Das Metallbauteil selbst ist dabei anodisch gepolt. Über die düsenartige Kathode kann so in einem genau definierten Bereich der Materialabtrag am Werkstück erfolgen, und zwar ausschließlich im Eingriffsbereich des auftreffenden Elektrolytstrahls. Nach einer ersten Erfindungsalternative ist die Kathode selbst an einem Manipulatorelement, bevorzugt einem mehrachsigen, vorzugsweise wenigstens fünf Bewegungsachsen aufweisenden Roboter, angeordnet, über welchen Roboter mit zugeordneter Steuerungseinrichtung die Kathode frei (dreidimensional) im Raum bewegbar ist. D. h., dass die Kathode beliebig bewegt werden kann, mithin also auch beliebige Geometrien abfahren kann. Da die Kathode selbst ein sehr dünnes, schmales Bauteil mit einem Durchmesser von nur wenigen Millimetern ist, kann sie folglich über den Roboter auch in extrem schmale, enge Bauteilbereiche bewegt und dort verfahren werden. Dies wiederum ermöglicht es, auch Bauteile mit sehr komplexer Geometrie in ausgezeichneten, sonst kaum zugänglichen Bereichen bearbeitungskraftfrei bearbeiten zu können. Nach einer zweiten Erfindungsalternative ist das Metallbauteil mittels des Manupulatorelements, wiederum bevorzugt einem mehrachsigen, vorzugsweise wenigstens fünf Bewegungsachsen aufweisenden Roboter, frei (dreidimensional) im Raum bewegbar, d.h., dass hier das Metallbauteil beliebig relativ zur dünnen Kathode bewegt wird. Auch mittels dieser Bewegungsvariante können infolge der freien Bewegbarkeit auch komplexe Geometrien bearbeitet werden. Der Erfindung liegt also der Gedanke zu Grunde, dass eine räumlich freie Relativbeweglichkeit zwischen Kathode und Metallbauteil gegeben ist, die mittels des Manipulatorelements realisiert wird.

Das elektrochemische Arbeitsverfahren ermöglicht auch die Bearbeitung unterschiedlichster Materialien, d. h., dass auch Materialien, die mit üblichen Arbeitsverfahren nur schwer zu bearbeiten sind, weil sie sehr schwer zerspanbar sind, ohne Weiteres im ECM-Verfahren bearbeitet werden können. Verbunden mit der Bewegungsfreiheit der Kathode oder des Metallbauteils, also der beliebigen Bewegbarkeit im Raum, bietet das erfindungsgemäße Verfahren somit die Möglichkeit, beliebige Bauteile respektive komplexe Geometrien nahezu unabhängig vom verwendeten Material feinbearbeiten zu können.

Wie beschrieben ist als Manipulatorelement ein Roboter vorgesehen, der bevorzugt fünf Bewegungsachsen aufweisen sollte, gleichermaßen kann er aber auch sechsachsig sein, wodurch letztlich noch mehr Bewegungsfreiheitsgrade gegeben sind. Diese Mehrachsigkeit ermöglicht sowohl translatorische Bewegungen in den drei Raumrichtungen sowie rotatorische Bewegungen um die Raumrichtungen.

Nach einer Weiterbildung der Erfindung ist die Bewegung nicht nur auf die Kathode nach der ersten Erfindungsalternative bzw. das Metallbauteil nach der zweiten erfindungsalternative beschränkt. Vielmehr besteht die Möglichkeit, auch zusätzlich das Metallbauteil (bei freier Bewegbarkeit der Kathode) oder die Kathode (bei freier Bewegbarkeit des Metallbauteils) zu bewegen, also z.B. eine translatorische Bewegung z.B. längs einer oder mehrere Raumachsen zuzulassen, oder um eine oder mehrere Raumachsen gegebenenfalls zusätzlich zu drehen. D.h., dass zusätzliche Bewegungsfreiheitsgrade am jeweils anderen zentralen Arbeitselement gegeben sind, zusätzlich zu den über das Manipulatorelement gegebenen Bewegungsmöglichkeiten.

Die Kathode ist wie ausgeführt ein dünnes Röhrchen mit einem Durchmesser von wenigen Millimetern, sofern sie querschnittlich rund ist und einen runden Elektrolytstrahl abgibt. Alternativ kann auch eine quasi "gequetschte" Kathode verwendet werden, die länger als breit ist, oder eine Hohlkathode mit beliebigem anderen Querschnitt. Abhängig von der Elektrolytstrahlgeometrie definiert sich die Geometrie des Arbeitsbereichs, weshalb je nach zu bearbeitendem Bauteilabschnitt die entsprechende Kathodengeometrie gewählt wird. Zur besseren Erreichbarkeit schwer zugänglicher Werkstückabschnitte sind gebogene bzw. angewinkelte Kathodenausführungen einsetzbar.

Die wesentlichen Prozessparameter sind der Abstand zwischen Kathode und Werkstück, die Arbeitsspannung bzw. der Prozessstrom, die Verweildauer der Kathode über der zu bearbeitenden Stelle bzw. die damit verknüpfte Vorschubgeschwindigkeit der Kathode relativ zum Metallbauteil sowie die Zusammensetzung und der Volumenstrom des Elektrolyten. Durch geeignete Wahl dieser Parameter kann der Materialabtrag hinsichtlich Abtragstiefe und Abtragsgeschwindigkeit gesteuert werden, wobei bei Einstellung der Parameter stets darauf zu achten ist, dass möglichst wenig Streuströme auftreten, die dazu führen würden, dass es gegebenenfalls zu einem Materialabtrag auch außerhalb des eigentlichen Arbeitsbereichs kommt. Beispielsweise kann die zwischen Kathode und Metallbauteil anliegende Arbeitsspannung, die typischerweise zwischen 5V - 200V beträgt, oder der dazwischen fließende Prozessstrom konstant oder gepulst sein, und/oder der Volumenstrom des Elektrolyten zwischen 10 - 100 l/h betragen.

Die Steuerung des Roboters, also die Bewegung der Kathode zum Abfahren der zu bearbeitenden Bauteilgeometrie erfolgt über eine geeignete Steuerungseinrichtung, die über ein entsprechendes Steuerprogramm verfügt. Der Steuerung liegt ein Modell des Bauteils respektive der Bauteilgeometrie zugrunde, das in einem geeigneten Programm, das der Steuerung dient, abgelegt ist. Im Betrieb wird nun, gestützt auf das Programm, die Kathode oder das Metallbauteil (je nach dem, wer mit dem Manipulatorelement bewegt wird) entlang des zu bearbeitenden Bauteilabschnitts bewegt. Da wie beschrieben der Materialabtrag letztlich von den eingestellten Prozessparametern und insbesondere vom Abstand der Kathode zur Bauteiloberfläche abhängt, sieht eine zweckmäßige Weiterbildung der Erfindung vor, dass aus dem Verhältnis von Arbeitsspannung und Prozessstrom der Abstand zwischen Kathode und Oberfläche des Metallbauteils ermittelt und/oder in Abhängigkeit davon der Prozessablauf durch Verändern eines beliebigen, oben genannten Prozessparameters gesteuert wird, z. B. der Vorschubgeschwindigkeit, wobei der Vorschub konstant oder intermittierend sein kann.

Die Arbeitsspannung und der Prozessstrom werden erfasst, auch die Querschnittsfläche des Elektrolytstrahls und damit die Arbeitsfläche ist bekannt. Diese Größen stehen in erster Näherung mit dem Abstand zwischen Kathode und Oberfläche des Metallbauteils über das Ohmsche Gesetz in einem eindeutig bestimmten, formalen Zusammenhang. Mithin sind also die Abtragtiefe und damit der Arbeitsfortschritt eindeutig mit den vorgenannten Parametern verknüpft. Somit kann ein beliebiger Parameter, z. B. die Verweildauer der Kathode über der Metallbauteiloberfläche bzw. die Vorschubgeschwindigkeit der Kathode längs der Bauteiloberfläche, in Abhängigkeit des laufend ermittelten Kathodenabstands so eingestellt werden, dass das gewünschte Arbeitsergebnis erreicht wird.

Eine Weiterbildung der Erfindung sieht vor, dass über die Kathode ein den Elektrolytstrahl zumindest abschnittsweise, vorzugsweise vollständig seitlich umschließender Gasvorhang, vorzugsweise ein Luftvorhang ausgeblasen wird. Das heißt, dass über die Kathode nicht nur der Elektrolytstrahl abgegeben wird, sondern auch ein Gasstrom, der den Elektrolytstrahl vorzugsweise vollständig umschließt. Dies führt dazu, dass der Elektrolytstrahl konzentriert auf die Bauteiloberfläche abgegeben und von der Umgebung des Arbeitsbereichs durch "Abblasen" ferngehalten wird. Hierüber wird vermieden, dass ein ungewollter Angriff benachbarter Flächen eintritt, mithin also Streuströme zu einem ungewollten Abtrag in benachbarten Bereichen führen. Die Düse selbst ist also doppelwandig ausgeführt, mit einem inneren Elektrolytkanal und einem äußeren Luftkanal, die an entsprechende Versorgungsleitungen angeschlossen sind. Neben Luft kann auch ein anderes Gas, z.B. Inertgas wie Stickstoff oder Helium, zur Bildung des Gasvorhangs verwendet werden.

Wie bereits beschrieben eignet sich das erfindungsgemäße Verfahren insbesondere zum Bearbeiten von Bauteilen aus besonderen (metallischen und intermetallischen, hochwarmfesten) Materialien, vornehmlich dienlich ist es bei der Bearbeitung von Metallbauteilen aus Stählen, Titanlegierungen und insbesondere aus Nickellegierungen, die äußerst schwer zu zerspanen sind.

Ein Metallbauteil, das mit dem erfindungsgemäßen Verfahren besonders bevorzugt zu bearbeiten ist, ist ein Bauteil einer Turbomaschine, beispielsweise ein Gehäusebauteil, insbesondere jedoch ein Schaufelbauteil. Besonders schwierig herzustellende Schaufelbauteile mit sehr komplexer Geometrie sind Integralrotoren, (sog. Blisks), Leitschaufelcluster oder Leitschaufelringe, wie sie beispielsweise im Hochdruckverdichter einer Gasturbine zum Einsatz kommen. Solche Integralrotoren, Leitschaufelcluster oder Leitschaufelringe sind extremen Anforderungen ausgesetzt, weshalb sie entweder aus einer Titanlegierung oder aus hochwarmfestem Stahl, bevorzugt aber aus einer Nickellegierung bestehen. Insbesondere die Leitschaufelcluster und die Leitschaufelringe weisen eine sehr komplexe Geometrie auf, üblicherweise bestehend aus zwei Deckbändern, zwischen denen sich die verwundenen Leitschaufelblätter erstrecken. Die Abstände der Schaufelblätter liegen im Bereich weniger Millimeter bis in den Zentimeterbereich. Hierdurch ist die Zugänglichkeit der Bereiche zwischen den Schaufelblättern stark eingeschränkt. Gleichwohl bedürfen insbesondere die Ecken/Kanten respektive die Übergangsflächen in diesen Bereichen der erfindungsgemäßen Feinbearbeitung. Wird ein solcher Leitschaufelcluster oder ein Leitschaufelring durch spanende oder abtragende Verfahren aus Vollmaterial hergestellt, ergibt sich zwangsläufig ein beachtlicher Feinbearbeitungsaufwand, insbesondere im Bereich zwischen den Schaufelblättern. Gerade bei der Herstellung von Schaufelbauteilen, insbesondere der Leitschaufelcluster oder Leitschaufelringe, ist das erfindungsgemäße Verfahren besonders vorteilhaft einsetzbar, insbesondere wenn sehr kleine Schaufelblatt- und Deckbandabstände gegeben sind. Denn mit dem erfindungsgemäßen Verfahren können ohne Weiteres die dort vorhandenen Kanten und Flächen im Bereich zwischen zwei Schaufelblättern und/oder die Schaufelblätter selbst bearbeitet werden, da die sehr dünne, schmale Kathode über den sie beliebig im Raum bewegenden Roboter auch in diese äußerst schmalen Bereiche bewegt und dort hochgenau positioniert werden kann.

Neben dem Verfahren betrifft die Erfindung ferner eine Vorrichtung zur Durchführung des Verfahrens, umfassend ein Manipulatorelement in Form eines mehrachsigen, vorzugsweise fünf- oder sechsachsigen Roboters, an dem ein ECM-Werkzeug in Form einer düsenartigen Kathode oder ein das Metallbauteil halternder Werkstückhalter angeordnet ist, eine Elektrolytzuführeinrichtung zum Zuführen des Elektrolyten aus einem Elektrolytreservoir an die Kathode, eine mit der Kathode und dem Metallbauteil verbundene Prozessenergiequelle sowie eine den Betrieb der Vorrichtung steuernde Steuerungseinrichtung. Die Kathode, die selbstverständlich auswechselbar an einem entsprechenden Kathodenhalter am Roboter angeordnet ist, weist einen runden, länglichen oder beliebig anderen Querschnitt auf, je nach Bearbeitungsaufgabe wird die gewünschte Kathodenform eingesetzt. Zur besseren Erreichbarkeit schwer zugänglicher Werkstückabschnitte sind gebogene bzw. angewinkelte Kathodenausführungen möglich.

In Weiterbildung der Erfindung kann die Kathode zur Abgabe von ihr über eine Gaszufuhreinrichtung zugeführtes Gas, vorzugweise Luft, in Form eines den aus der Kathode austretenden Elektrolytstrahl zumindest abschnittsweise, vorzugsweise vollständig seitlich umschließenden Luftvorhangs ausgebildet sein. Hierüber wird eine Konzentration des Materialabtrags auf den Arbeitsbereich bewirkt, eine Beeinflussung benachbarter Gebiete kann hierüber verringert werden. Die Düse selbst ist also beispielsweise doppelwandig ausgeführt, mit einem inneren Elektrolytkanal und einem diesen umschließenden äußeren Gaskanal, die an entsprechende Versorgungsleitungen angeschlossen sind.

Eine vorteilhafte Weiterbildung sieht vor, dass bei Anordnung der Kathode am Manipulatorelement zusätzlich der Werkstückhalter bewegbar ist, vorzugsweise längs oder um mehrere Raumachsen, oder dass bei Anordnung des Werkstückhalters am Manipulatorelement zusätzlich die Kathode bewegbar ist, vorzugsweise ebenfalls längs oder um mehrere Raumachsen. D. h., dass bei der erfindungsgemäßen Vorrichtung zwei Bewegungsmodalitäten vorgesehen sind, nämlich einerseits der Roboter zur Bewegung der Kathode oder des Werkstückhalters samt Metallbauteil, andererseits zusätzlich der Werkstückhalter oder die Kathode, so dass für den jeweiligen Anwendungsfall ein angepasster relativer Bewegungsablauf zwischen Kathode (Werkzeug) und Metallbauteil (Werkstück) einstellbar ist. Schließlich ist ein Mittel zur Erfassung des Abstands der Kathode zur Bauteiloberfläche vorgesehen. Dieser Düsenabstand ist ein Maßstab für die Abtragsleistung und die Abtragstiefe und ist eindeutig in erster Näherung über das Ohm sche Gesetz mit den Prozessparametern Arbeitsspannung, Prozessstrom und Querschnittsfläche des Elektrolytstrahls verknüpft, weshalb zur kontinuierlichen Überwachung des Arbeitsergebnisses die Abstandserfassung vorteilhaft ist. Das diesbezügliche Mittel ist zweckmäßigerweise die Steuerungseinrichtung, die den Abstand ermittelt. Gegebenenfalls kann anhand des erfassten Abstands, ein beliebiger Parameter z. B. die Verweildauer der Kathode über der Werkstückoberfläche bzw. die Vorschubgeschwindigkeit der Kathode längs der Bauteiloberfläche so eingestellt werden, dass das gewünschte Arbeitsergebnis erreicht wird. Die Abstandsermittlung kann aber auch mittels eines oder mehrerer Abstandssensoren erfolgen, wobei die Steuerungseinrichtung wiederum den Betrieb, also die relevanten Prozessparameter entsprechend der Sensormessergebnisse steuert.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung als Perspektivansicht eines mit dem erfindungsgemäßen Verfahren und der erfindungsgemäßen Vorrichtung zu bearbeitenden Leitschaufelclusters,
- Fig. 2: eine Prinzipdarstellung der erfindungsgemäßen Vorrichtung,

- Fig. 3: eine Prinzipdarstellung des Arbeitsbereichs Kathode-Metallbauteil,
- Fig. 4: eine Prinzipdarstellung der Kathodenbewegung, und
- Fig. 5: eine Prinzipdarstellung einer Kathode mit den Elektrolytstrahl seitlich begrenzendem Gasvorhang.

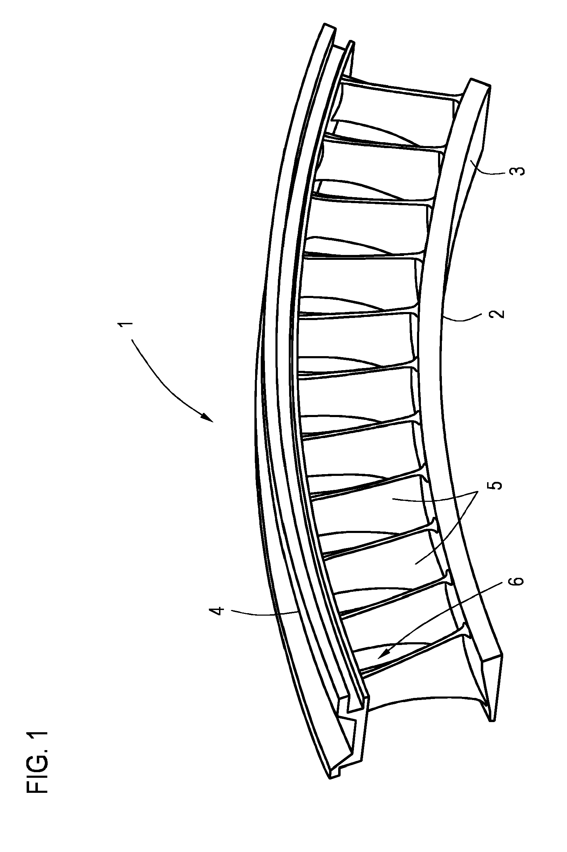

Fig. 1 zeigt in Form einer Perspektivansicht ein Metallbauteil 1 in Form eines Leitschaufelclusters 2, der zur Bildung eines kompletten Rings mit mehreren derartiger Clustern zur Ringform zusammengesetzt wird. Ein solcher Leitschaufelcluster besteht aus zwei Deckbändern 3, 4 sowie einer Vielzahl sich zwischen diesen erstreckender Schaufelblätter 5. Die Deckbänder 3, 4 und die Schaufelblätter 5 werden durch spanende und/oder abtragende Bearbeitungsverfahren aus Vollmaterial herausgearbeitet. Die Schaufelblätter 5 haben eine komplex verwundene Geometrie und sind sehr eng zueinander beabstandet, d. h., dass nur sehr schmale Zwischenräume 6 zwischen den einzelnen Schaufelblättern 5 gegeben sind. Infolge der komplexen Geometrie ergeben sich folglich gekrümmte Kantenbereiche sowie gekrümmte Flächen im Übergang zwischen den Schaufelblättern 5 und den Deckbändern 3, 4 respektive an den Flächen der Deckbänder 3, 4 und an den Flächen der Schaufelblätter 5 selbst, die, nachdem das Metallbauteil 1 bzw. seine Teilbereiche (Deckbänder 3, 4, Schaufelblätter 5) unter Verwendung entsprechender Arbeitsverfahren vorbearbeitet wurden, unter Verwendung des erfindungsgemäßen Verfahrens fein bearbeitet werden müssen.

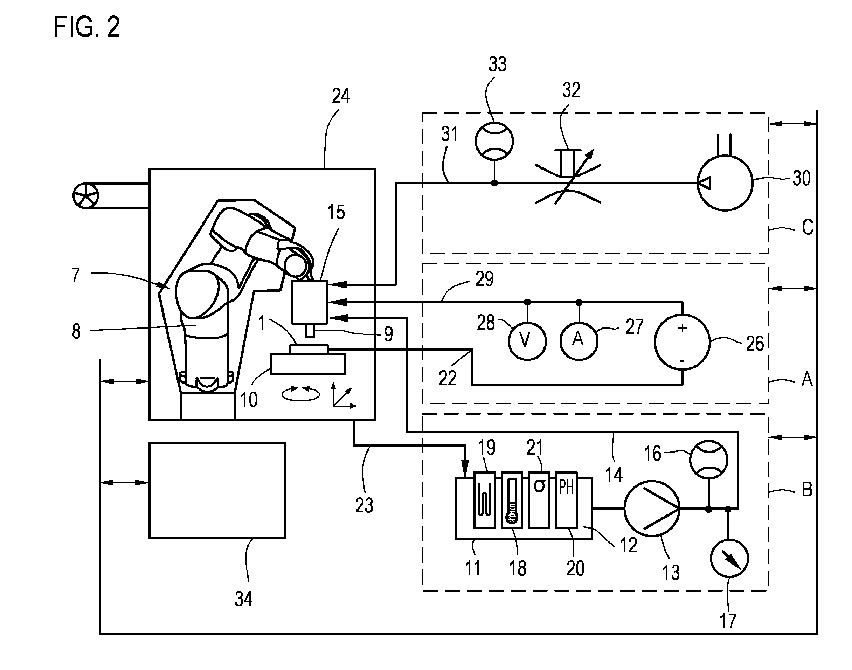

Hierzu dient eine Vorrichtung, wie sie in Fig. 2 als Prinzipdarstellung gezeigt ist. Die Vorrichtung umfasst ein Manipulatorelement 7 in Form eines mehrachsigen, vorzugsweise wenigstens fünfachsigen Roboters 8, der eine Kathode 9 trägt, die der ECM-Bearbeitung des Metallbauteils 1, das auf einem entsprechenden Werkstückhalter 10 angeordnet ist, dient. Die Kathode 9 ist ein düsenartiges, schmales Rohr, das über den Roboter 8 beliebig im Raum bewegt werden kann, so dass mithin beliebige dreidimensionale Strukturen abgefahren und bearbeitet werden können. Neben der Beweglichkeit der Kathode 9 kann auch der Werkstückhalter 10 bewegbar sein, entweder translatorische längs einer oder mehrerer Raumachsen oder rotatorisch um eine oder mehrere Raumachsen, oder sowohl translatorisch als auch rotatorisch, wie durch die Bewegungspfeile angedeutet.

Über die Kathode 9 wird ein flüssiger Elektrolyt, beispielsweise eine NaCl-Lösung, unmittelbar in den Arbeitsbereich abgegeben, weshalb die Elektrode 9 wie beschrieben als Düse oder Rohr ausgeführt ist. Zu diesem Zweck ist ein Elektrolytreservoir 11 vorgesehen, aus dem der Elektrolyt 12 über eine gesteuerte Pumpe 13 und eine geeignete Elektrolytzufuhrleitung 14 an die Kathode 9 geführt wird. Am Roboter 8 ist ein entsprechender Anschlusskasten 15 vorgesehen, an dem die Leitung mündet und an dem auch die Kathode 9 auswechselbar aufgenommen ist. Über einen Durchflussmesser 16 kann der Volumenstrom des Elektrolyten überwacht werden, über einen Druckmesser 17 der Fluiddruck. Im Elektrolytreservoir 11 ist ferner eine Temperaturmesseinrichtung 18, ein Heizregler 19 sowie ein pH-Messgerät 20 und ein Leitwert-Messgerät 21 vorgesehen, um die Elektrolyteigenschaften entsprechend einstellen respektive überwachen zu können.

Eine Elektrolytrückführleitung 23 führt den nach Abgabe über die Kathode 9 aufgefangenen Elektrolyten wieder in das Elektrolytreservoir 11 zurück, d. h., dass ein Kreislauf gegeben ist. Der Roboter 8 sowie der Werkstückträger 10 sind in einer Einhausung 24 vorgesehen, d. h., dass die Vorrichtung bezüglich des Arbeitsbereichs insofern geschlossen ist.

Die Vorrichtung umfasst ferner eine Prozessenergiequelle 26, über die die Arbeitsspannung sowie der Prozessstrom anlegbar ist. Die Parameter werden über ein Amperemeter 27 und ein Voltmeter 28 entsprechend überwacht. Eine Versorgungsleitung 29 läuft wiederum zum Anschlusskasten 15, sie ist mit der Kathode 9 kontaktiert. Die Versorgungsrückleitung 22 führt vom Metallbauteil 1 zurück zur Prozessenergiequelle 26. Im Prozess wird durch den Elektrolytstrahl der Stromkreis geschlossen.

Schließlich ist eine Gasversorgung, hier gezeigt in der Ausführung als Druckluftversorgung beispielsweise in Form eines Kompressors 30 vorgesehen, von dem aus eine Luftzufuhrleitung 31 ebenfalls zum Anschlusskasten 15 läuft. Diese Luftzufuhrleitung ist wiederum mit der Kathode verbunden, die als doppelwandiges Rohr ausgeführt ist. In dem mittigen Kanal wird der Elektrolyt zugeführt, im äußeren Kanal kann über die zugeführte Druckluft ein Luftvorhang ausgeblasen werden, der den Elektrolyt einschließt. In der Luftzufuhrleitung 31 ist ein gesteuertes Drosselventil 32 sowie ein Durchflussmesser 33, über den der Luftstrom gemessen werden kann, vorgesehen.

Es sind also drei grob unterscheidbare Bereiche vorgesehen, nämlich der Bereich A "Prozessenergie", der Bereich B "Elektrolytversorgung", und der Bereich C "Druckluftversorgung".

Schließlich ist eine Steuerungseinrichtung 34 vorgesehen. Die Steuerungseinrichtung steuert den Betrieb des Roboters 8, also die im Raum freie Bewegung der Kathode 9 und die Bewegung des Werkstückhalters 10, soweit vorgesehen. Selbstverständlich ist es auch möglich, über die Steuerungseinrichtung 34 alle Teilkomponenten der Vorrichtung in Fig. 2 zur Elektrolyt- und Gasversorgung sowie die Prozessenergiequelle 26 (also der Bereiche A, B und C) zu steuern und zu überwachen.

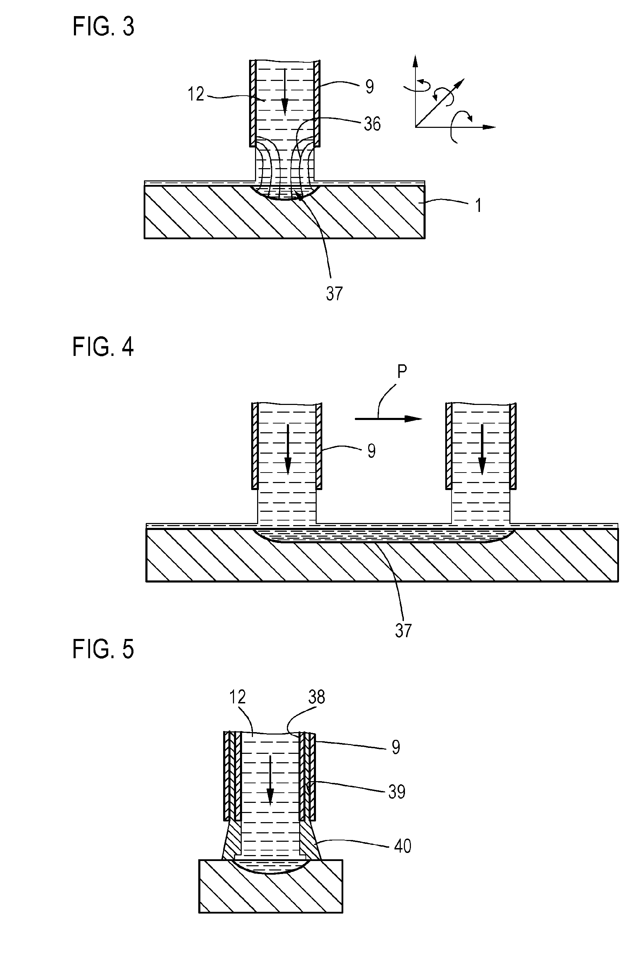

Fig. 3 zeigt als Prinzipdarstellung die Spitze der Kathode 9 in einer Schnittdarstellung. Durch die rohrförmige, düsenartige Kathode 9 strömt der Elektrolyt 12. Beabstandet zur Kathode 9 ist das anodisch gepolte Metallbauteil 1, beispielsweise der aus Fig. 1 bekannte Leitschaufelcluster 2. Die Kathode 9 ist, wie durch das Pfeildiagramm dargestellt ist, in den drei Raumrichtungen translatorisch bewegbar, wie sie auch um jede der drei Raumrichtungen rotatorisch bewegt werden kann. Hierzu wird der Roboter 8 über die Steuerungseinrichtung 34 entsprechend angesteuert. Steuerungsgrundlage hierfür ist ein abgelegtes Modell des Metallbauteils 1, das die Oberfläche definiert, längs welcher die Elektrode 9 bewegt werden soll.

Ersichtlich wird der Elektrolyt 12 durch die düsen- oder rohrförmige Kathode 9 gefördert und zum Metallbauteil 1 abgegeben. Im Elektrolytstrahl 12 bildet sich ein elektrisches Strömungsfeld 36 aus. Es kommt zu einem elektrochemischen, lokal begrenzten Metallabtrag im Bereich 37, d. h., dass sich eine Eintiefung im Metallbauteil 1 ausbildet. Entsprechend den gewählten Prozessparametern ergibt sich die entsprechende Abtragstiefe.

Fig. 4 zeigt als Prinzipdarstellung die Bewegung der Kathode 9, die beispielsweise bei runder Querschnittsgeometrie einen Durchmesser von drei Millimetern hat und zur ursprünglichen Werkstückoberfläche beispielsweise einen Millimeter beabstandet ist. Ersichtlich kann durch eine Horizontalbewegung der Kathode 9, wie durch den Pfeil P dargestellt, ein zeilenförmiger Bereich 37 abgetragen werden. Während in Fig. 4 nur eine Bewegung längs einer Raumkoordinate dargestellt ist, kann wie beschrieben die Kathode 9 beliebig im Raum bewegt werden, d. h., dass ohne Weiteres die rundlichen Kantenbereiche des in Fig. 1 gezeigten Leitschaufelclusters 2 oder die dreidimensional verwundenen Schaufelblätter 5 etc. abgefahren werden können, um dort in gewünschtem Maße Material abzutragen.

Fig. 5 zeigt schließlich eine weitere Ausführungsform der Kathode 9, die als doppelwandiges Rohr ausgeführt ist. Im mittigen Kanal 38 wird der Elektrolyt 12 geführt. Im äußeren Kanal 39 wird die über die Gaszuführeinrichtung, in Fig. 2 gezeigt als Luftzufuhreinrichtung 31 zugeführte Druckluft abgeführt. Wie Fig. 5 zeigt, bildet sich ein den Elektrolytstrahl 12 allseitig umschließender Gasvorhang 40 aus. Hierüber kann eine Verringerung des Angriffs angrenzender Metallbauteilflächen erreicht werden.

Wenngleich in den Figuren exemplarisch eine querschnittlich runde Kathode 9 gezeigt ist, kann die Kathode selbstverständlich auch einen länglichen oder beliebig anderen Querschnitt besitzen. Sie kann beispielsweise im Elektrolytkanal eine Länge von 10 mm und eine Breite von 3 mm besitzen, so dass ein langes, jedoch schmales Gebiet bearbeitet werden kann, was insbesondere zur Bearbeitung größerer Flächen zweckmäßig ist. Ist ein Gasvorhang vorhanden, so weist der entsprechende Luftkanal selbstverständliche eine entsprechende Geometrie auf.

## Patentansprüche

1. Verfahren zur Herstellung eines Metallbauteils, das eine durch eine Material abtragende und/oder eine Material umformende Bearbeitung erzeugte dreidimensionale Form aufweist, wobei eine Bearbeitung eines oder mehrerer ausgezeichneter Bauteilabschnitte durch elektrochemische Bearbeitung mittels einer düsenartigen Kathode, über die ein Elektrolyt in den Arbeitsbereich abgegeben wird, und wobei die Kathode oder das Metallbauteil mittels eines Manipulatorelements frei im Raum bewegt wird, erfolgt.

2. Verfahren nach Anspruch 1, **dadurch gekennzeichnet, dass** als Manipulatorelement ein mehrere Bewegungsachsen, vorzugsweise fünf oder sechs Bewegungsachsen aufweisender Roboter verwendet wird.

3. Verfahren nach Anspruch 1 oder 2, **dadurch gekennzeichnet, dass** bei einer über das Manipulatorelement erfolgenden Bewegung der Kathode während der Bearbeitung auch das an einem bewegbaren Werkstückhalter angeordnete Metallbauteil bewegt wird, oder dass bei einer über das Manipulatorelement erfolgenden Bewegung des Metallbauteils während der Bearbeitung auch die an einem bewegbaren Halter angeordnete Kathode bewegt wird.

4. Verfahren nach einem der vorangehenden Ansprüche, **dadurch gekennzeichnet, dass** der Elektrolyt als querschnittlich im Wesentlichen runder Strahl oder als Strahl mit beliebig geformtem Querschnitt von einer die entsprechende Querschnittsgeometrie aufweisenden Kathode abgegeben wird.

5. Verfahren nach einem der vorangehenden Ansprüche, **dadurch gekennzeichnet, dass** die zwischen Kathode und Metallbauteil anliegende Arbeitsspannung oder der dazwischen fließende Prozessstrom konstant oder gepulst ist, und/oder der Volumenstrom des Elektrolyten zwischen 10 - 100 l/h beträgt.

6. Verfahren nach einem der vorangehenden Ansprüche, **dadurch gekennzeichnet, dass** aus dem Verhältnis von Arbeitsspannung und Prozessstrom der Abstand der Kathode zur Oberfläche des Metallbauteils ermittelt wird und/oder in Abhängigkeit davon der Prozessablauf durch Verändern eines beliebigen Prozessparameters gesteuert wird.

7. Verfahren nach einem der vorangehenden Ansprüche, **dadurch gekennzeichnet, dass** über die Kathode ein den Elektrolytstrahl zumindest abschnittsweise, vorzugsweise vollständig seitlich umschließender Gasvorhang ausgeblasen wird.

8. Verfahren nach einem der vorangehenden Ansprüche, **dadurch gekennzeichnet, dass** das zu bearbeitende Bauteil aus einem metallischen oder intermetallischen Werkstoff, insbesondere aus einem Stahl, einer Titanlegierung oder einer Nickellegierung besteht.

9. Verfahren nach einem der vorangehenden Ansprüche, **dadurch gekennzeichnet, dass** als Metallbauteil ein Bauteil einer Turbomaschine, insbesondere ein Schaufelbauteil bearbeitet wird.

10. Verfahren nach Anspruch 9, **dadurch gekennzeichnet, dass** das Bauteil einer Turbomaschine ein Schaufelbauteil ist, insbesondere ein Leitschaufelcluster oder ein Leitschaufelring.

11. Verfahren nach Anspruch 10, **dadurch gekennzeichnet, dass** als ausgezeichnete Bauteilabschnitte Kanten und Flächen im Bereich zwischen zwei Schaufelblättern des Schaufelbauteils und/oder die Schaufelblätter des Schaufelbauteils selbst bearbeitet werden.

12. Vorrichtung zur Durchführung des Verfahrens nach einem der vorangehenden Ansprüche, umfassend ein Manipulatorelement (7) in Form eines mehrachsigen, vorzugsweise fünf- oder sechsachsigen Roboters (8), an dem ein ECM-Werkzeug in Form einer düsenartigen Kathode (9) oder ein das Metallbauteil halternder Werkstückhalter (10) angeordnet ist, eine Elektrolytzuführeinrichtung (11, 13, 14) zum Zuführen des Elektrolyten (12) aus einem Elektrolytreservoir (11) an die Kathode (9), eine mit der Kathode (9) und dem Metallbauteil (1) verbundene Prozessenergiequelle (26) sowie eine den Betrieb der Vorrichtung steuernde Steuerungseinrichtung (34).

13. Vorrichtung nach Anspruch 12, **dadurch gekennzeichnet, dass** die Kathode (9) einen runden oder beliebig geformten Querschnitt aufweist.

14. Vorrichtung nach Anspruch 12 oder 13, **dadurch gekennzeichnet, dass** die Kathode (9) zur Abgabe von ihr über eine Gaszufuhreinrichtung (30, 31) zugeführtem Gas, insbesondere Luft, in Form eines den aus der Kathode austretenden Elektrolytstrahl zumindest abschnittsweise, vorzugsweise vollständig seitlich umschließenden Gasvorhangs (40) ausgebildet ist.

15. Vorrichtung nach einem der Ansprüche 12 bis 14, **dadurch gekennzeichnet, dass** bei Anordnung der Kathode am Manipulatorelement zusätzlich der Werkstückhalter (10) bewegbar ist, oder dass bei Anordnung des Werkstückhalters am Manipulatorelement zusätzlich die Kathode bewegbar ist.

16. Vorrichtung nach einem der Ansprüche 12 bis 15, **dadurch gekennzeichnet, dass** ein Mittel zur Erfassung des Abstands der Kathode (9) zur Bauteiloberfläche vorgesehen ist.

17. Vorrichtung nach Anspruch 16, **dadurch gekennzeichnet, dass** das Mittel die Steuerungseinrichtung (34) ist, die anhand des Verhältnisses von Arbeitsspannung und Prozessstrom den Abstand ermittelt und gegebenenfalls in Abhängigkeit davon den Prozessablauf durch Verändern eines beliebigen Prozessparameters steuert, oder dass das Mittel wenigstens ein Sensor ist, wobei die Steuerungseinrichtung (34) gegebenenfalls in Abhängigkeit des Sensorerfassungsergebnisses den Prozessablauf durch Verändern eines beliebigen Prozessparameters steuert.
